(19) Europäisches Patentamt / European Patent Office / Office européen des brevets

(11) **EP 4 576 261 A1**

(12) **EUROPEAN PATENT APPLICATION**
published in accordance with Art. 153(4) EPC

(43) Date of publication:
**25.06.2025 Bulletin 2025/26**

(21) Application number: **23907817.3**

(22) Date of filing: **21.12.2023**

(51) International Patent Classification (IPC):
$H01M\ 4/525^{(2010.01)}$   $H01M\ 4/505^{(2010.01)}$
$H01M\ 4/131^{(2010.01)}$   $H01M\ 10/052^{(2010.01)}$
$H01M\ 4/02^{(2006.01)}$

(52) Cooperative Patent Classification (CPC):
H01M 4/02; H01M 4/131; H01M 4/505;
H01M 4/525; H01M 10/052; Y02E 60/10

(86) International application number:
**PCT/KR2023/021279**

(87) International publication number:
**WO 2024/136534 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183385**

(71) Applicant: **LG Energy Solution, Ltd.**
**Seoul 07335 (KR)**

(72) Inventors:
• **HEO, Jong Wook**
  **Daejeon 34122 (KR)**
• **PARK, Byung Chun**
  **Daejeon 34122 (KR)**
• **JO, Chi Ho**
  **Daejeon 34122 (KR)**
• **KIM, Ji Hye**
  **Daejeon 34122 (KR)**
• **JUNG, Hae Jung**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE MATERIAL, CATHODE COMPRISING SAME, AND LITHIUM SECONDARY BATTERY**

(57) The present invention relates to a positive electrode material including: a first positive electrode active material being in the form of a secondary particle in which a plurality of grains are aggregated, comprising an orientational structure in which the long axis of the grain is arranged toward the surface from the center of the secondary particle in at least a portion of the secondary particle, and having a cobalt concentration at the grain boundary, which is the interface between the grains, higher than a cobalt concentration inside the grains; and a second positive electrode active material comprising a center part having at least one form among a single particle composed of one nodule and a quasi-single particle composed of a composite of at most 30 nodules, and a coating layer formed on the center part and containing cobalt.

FIG.1

**Description**

**Cross-reference to Related Applications**

This application claims the benefit of Korean Patent Application No. 10-2022-0183385, filed on December 13, 2022, the disclosure of which is incorporated herein in its entirety by reference.

**Technical Field**

The present invention relates to a positive electrode material, a positive electrode including the same, and a lithium secondary battery, and more specifically, to a positive electrode material having a low amount of gas generated at a high temperature due to low particle breakage during rolling, excellent lifetime characteristics, and a low initial resistance, and a positive electrode including the positive electrode material and a lithium secondary battery.

**BACKGROUND ART**

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide ($LiCoO_2$), lithium nickel oxide ($LiNiO_2$), lithium manganese oxide ($LiMnO_2$, $LiMnO_4$, or the like), a lithium iron phosphate compound ($LiFePO_4$), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese oxides including Ni, Co, and Mn are widely used in electric vehicle batteries.

Conventional lithium metal oxides are generally in the form of spherical secondary particles in which tens to hundreds of primary particles are aggregated. However, with respect to the lithium metal oxides in the form of secondary particles in which many primary particles are aggregated as described above, there is a limitation in that particle breakage, in which the primary particles fall off in a rolling process during preparation of a positive electrode, is easy to occur and cracks occur in the particles during charge and discharge. When the particle breakage or cracks of the positive electrode active material occur, since a contact area with the electrolyte solution increases, gas generation and degradation of the active material due to a side reaction with the electrolyte solution are increased, and as a result, there is a limitation in that lifetime characteristics are deteriorated.

In order to solve the above limitations, a single-particle positive electrode active material composed of a single particle has been developed. The single-particle positive electrode active material has the advantage of having high particle strength and less particle breakage during rolling, thereby achieving excellent lifetime characteristics, but having poor resistance and output characteristics, when the particle size is increased, due to high lithium diffusion resistance inside the particles. Therefore, the single particle is currently used in the form of a small particle with a $D_{50}$ of 4 $\mu$m. However, when such a small particle positive electrode active material is used alone, since electrode processability is deteriorated, a technique of mixing and using secondary particles and a single particle has been proposed. However, when the secondary particles and the single particle are mixed and used, due to the difference in particle strength between the single particle and the secondary particles, the secondary particles are more severely broken during electrode rolling, and thus the effects of suppressing gas generation and improving the lifetime are insignificant, and thus, it is not commercially available.

**DISCLOSURE OF THE INVENTION**

**TECHNICAL PROBLEM**

To solve the above limitations, an aspect of the present invention provides a positive electrode material which can achieve excellent lifetime characteristics and low initial resistance and reduce the amount of gas generated at high temperatures due to low particle breakage during rolling by using a mixture of secondary particles and a single particle-based positive electrode active material, wherein the secondary particles having a specific orientational structure and composition are mixed with a single particle-based positive electrode active material having a cobalt coating layer formed on the surface thereof.

In addition, another aspect of the present invention provides a positive electrode including the above-described positive electrode material and a lithium secondary battery.

## TECHNICAL SOLUTION

According to an aspect of the present invention, there is provided a positive electrode material including: a first positive electrode active material being in the form of a secondary particle in which a plurality of grains are aggregated, including an orientational structure in which the long axis of the grain is arranged toward the surface from the center of the secondary particle in at least a portion of the secondary particle, and having a cobalt concentration at the grain boundary, which is the interface between the grains, higher than a cobalt concentration inside the grains; and a second positive electrode active material including a center part having at least one form among a single particle composed of one nodule and a quasi-single particle composed of a composite of at most 30 nodules, and a coating layer formed on the center part and containing cobalt.

According to another aspect of the present invention, there is provided a positive electrode including the positive electrode material according to the present invention, and a lithium secondary battery including the positive electrode.

## ADVANTAGEOUS EFFECTS

The positive electrode material according to the present invention includes a first positive electrode active material in the form of a secondary particle having a specific orientational structure and composition; and a single-particle-based second positive electrode active material having a cobalt coating layer formed on the surface thereof, thereby having less particle breakage during rolling, less amount of gas generated at high temperatures, and excellent lifetime characteristics and low initial resistance compared to a conventional positive electrode material in which secondary particles and single particles are mixed.

Since the first positive electrode active material included in the positive electrode material according to the present invention includes an orientational structure in which the long axis of the grain is arranged to face the surface direction from the center of the secondary particle, the lithium diffusion path inside the particle is short, thereby achieving excellent lithium mobility and low resistance characteristics. However, the positive electrode active material having the orientational structure as described above allows for more severe particle breakage during electrode rolling than the positive electrode active material in the form of a secondary particle without orientation, and particularly, when mixed with single particles having high particle strength, particle breakage is further intensified. When the particle breakage of the positive electrode active material occurs, side reactions with the electrolyte increase, resulting in a decrease in the lifetime characteristics and an increase in the amount of gas generated. However, when a high cobalt concentration is formed in a grain boundary of secondary particles having an orientational structure like the first positive electrode active material of the present invention, particle strength is increased due to cobalt enriched in the grain boundary, so that even when mixed with single particles, the particle breakage is less, and the deterioration of the positive electrode active material and gas generation may be minimized.

The second positive electrode active material included in the positive electrode material according to the present invention has high particle strength, resulting in less particle breakage during rolling, and has low surface resistance because an electrically inactive rock salt phase is minimized due to the cobalt coating layer formed on the surface thereof.

## BRIEF DESCRIPTION OF THE DRAWINGS

FIG. 1 is a scanning electron microscope (SEM) image of a cross-section of a lithium composite transition metal oxide prepared in Preparation Example 1.

FIG. 2 is a SEM image of a cross-section of a lithium composite transition metal oxide prepared in Preparation Example 3.

FIG. 3 is a SEM image of a lithium composite transition metal oxide prepared in Preparation Example 4.

## BEST MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

As used herein, the term "grain" refers to a minimum particle unit which is distinguished as one lump without an apparent grain boundary when viewed from in the view at a magnification of 5,000 to 20,000 using a scanning electron microscope, and may be formed of one crystallite or a plurality of crystallites. In the present invention, an average particle diameter of the grain may be determined by a method of measuring each particle size distinguished from cross-sectional SEM data of the positive electrode active material particles and then calculating an arithmetic average value thereof.

As used herein, the term "secondary particle" refers to a secondary structure formed by the aggregation of a plurality of grains.

As used herein, the term "$D_{50}$" refers to a particle size based on 50% of the volume cumulative particle size distribution of the powder to be measured. The $D_{50}$ may be measured using a laser diffraction method. For example, powder of positive electrode active materials may be dispersed in a dispersion medium, then introduced into a commercially available laser diffraction particle size measuring apparatus (e.g., Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter $D_{50}$.

As used herein, the term "orientational structure" refers to a structure in which the long axis of the grain is arranged toward the surface from the center of the secondary particle. In this case, the expression "the long axis of the grain is arranged toward the surface from the center of the secondary particle" means that the angle formed by the shortest line segment connecting the center and the surface of the secondary particle while passing through the corresponding grain, and the long axis of the grain is within the range of -15° to 15°.

As used herein, the term "aspect ratio of the grain" refers to the ratio of the length of the long axis to the length of the short axis of the grain, and the term "average aspect ratio" refers to the arithmetic average value of the aspect ratio of the grains in the corresponding region.

As used herein, the term "single particle" refers to a particle composed of a single nodule. As used herein, the term "quasi-single particle" refers to a particle that is a composite formed of at most 30 nodules.

As used herein, the term "nodule" refers to a particle unit body constituting single particles and quasi-single particles, and the nodule may be a single crystal which lacks a crystalline grain boundary, or may be a polycrystal having no grain boundary in appearance when observed in the view at a magnification of 5,000 to 20,000 using a scanning electron microscope (SEM) or an electron backscatter diffraction (EBSD). The average particle diameter of the nodules refers to their arithmetic average value calculated after measuring the particle diameter of the nodules observed through SEM or EBSD.

The expression "particle" used herein may include any one or all among a single particle, a quasi-single particle, a primary particle, a nodule, and a secondary particle.

Hereinafter, the present invention will be described in detail.

\<Positive Electrode Material>

The positive electrode material according to the present invention includes a first positive electrode active material and a second positive electrode active material, the first positive electrode active material is in the form of a secondary particle in which a plurality of grains are aggregated, includes an orientational structure in which the long axis of the grain is arranged toward the surface from the center of the secondary particle in at least a portion of the secondary particle, and has a cobalt concentration at the grain boundary, which is the interface between the grains, higher than a cobalt concentration inside the grains, and the second positive electrode active material includes a center part having at least one form among a single particle composed of one nodule and a quasi-single particle composed of a composite of at most 30 nodules, and a coating layer formed on the center part and containing cobalt.

Preferably, the positive electrode material according to the present invention may have a bimodal particle size distribution in which the particle diameter of the first positive electrode active material is larger than the particle diameter of the second positive electrode active material. When the positive electrode material according to the present invention has a bimodal particle size distribution, a high electrode density may be achieved, and accordingly, battery capacity characteristics may be improved. However, in the case of the second positive electrode active material which is a single particle-based positive electrode active material, when the particle diameter is increased, the lithium diffusion path in the particles is lengthened, and thus resistance and output characteristics may be deteriorated, and thus it is preferable to achieve a high electrode density while minimizing the deterioration of resistance and output characteristics by making the particle diameter of the first positive electrode active material, which is in the form of a secondary particle, larger than the particle diameter of the second positive electrode active material.

Specifically, the $D_{50}$ of the first positive electrode active material may be 8 $\mu$m to 20 $\mu$m, preferably 8 $\mu$m to 18 $\mu$m, and more preferably 8 $\mu$m to 15 $\mu$m, and the $D_{50}$ of the second positive electrode active material may be 2 $\mu$m to 7 $\mu$m, preferably 2.5 $\mu$m to 7 $\mu$m, and more preferably 3 $\mu$m to 7 $\mu$m. When the $D_{50}$ of the first positive electrode active material and the second positive electrode active material satisfies the above range, the capacity characteristics, resistance characteristics, and output characteristics are better.

Meanwhile, the first positive electrode active material and the second positive electrode active material may have the same or different composition. For example, the first positive electrode active material and the second positive electrode active material may each independently include a nickel-based lithium composite transition metal oxide represented by Formula 1 below:

$$[\text{Formula 1}] \qquad Li_x[Ni_aCo_bM^1{}_cM^2{}_d]O_{2-y}A_y$$

In Formula 1 above, $M^1$ above may be at least one element selected from the group consisting of Mn and Al, and may be, for example, Mn or a combination of Mn and Al.

$M^2$ above may be at least one element selected from the group consisting of W, Cu, Fe, V, Cr, Ti, Zr, Zn, Ta, Y, In, La, Sr, Ga, Sc, Gd, Sm, Ca, Ce, Nb, Mg, B, and Mo.

In addition, A above may be at least one element selected from the group consisting of F, Cl, Br, I, At, and S.

x above represents a ratio of the number of moles of Li to the total number of moles of transition metals, wherein x may satisfy $0.98 \leq x \leq 1.20$, preferably $0.99 \leq x \leq 1.10$, and more preferably $1.0 \leq x \leq 1.10$.

a above represents a ratio of the number of moles of Ni to the total number of moles of the remaining metals excluding lithium, wherein a may satisfy $0 < a < 1$, preferably $0.3 \leq a < 1$, more preferably $0.6 \leq a < 1$, even more preferably $0.8 \leq a < 1$, and still even more preferably $0.85 \leq a < 1$.

b above represents a ratio of the number of moles of Co to the total number of moles of the remaining metals excluding lithium, wherein b may satisfy $0 < b < 1$, preferably $0 < b < 0.7$, more preferably $0 < b < 0.4$, even more preferably $0 < b < 0.2$, and still even more preferably $0 < b \leq 0.1$.

c above represents a ratio of the number of moles of $M^1$ to the total number of moles of the remaining metals excluding lithium, wherein c may satisfy $0 < c < 1$, preferably $0 < c < 0.7$, more preferably $0 < c < 0.4$, even more preferably $0 < c < 0.2$, and still even more preferably $0 < c \leq 0.1$.

d above represents a ratio of the number of moles of $M^2$ to the total number of moles of the remaining metals excluding lithium, wherein d may satisfy $0 \leq d \leq 0.2$, preferably $0 \leq d \leq 0.15$, and more preferably $0 \leq d \leq 0.10$.

y above represents a ratio of the number of moles of element A substituted at the position of oxygen, wherein y may satisfy $0 \leq y \leq 0.2$, preferably $0 \leq y \leq 0.15$, and more preferably $0 \leq y \leq 0.10$.

Meanwhile, the first positive electrode active material and the second positive electrode active material may be included in a weight ratio of 90:10 to 50:50, preferably 80:20 to 50:50, and more preferably 70:30 to 50:50. When the mixing ratio of the first positive electrode active material and the second positive electrode active material satisfies the above range, a high electrode density may be achieved.

As the positive electrode material of the present invention, when the first positive electrode active material having the orientational structure in which the grains are arranged toward the surface from the center of the secondary particles and having a composition in which the cobalt concentration at the grain boundary is higher than that inside the grains, and the single-particle-based second positive electrode active material having the cobalt coating layer formed on the surface thereof are used together, not only is the secondary particle breakage less during rolling, but also even though the particle breakage occurs, the grain surface is coated with cobalt and there is little side reaction with the electrolyte, and thus the amount of gas generated at high temperatures is small and lifetime characteristics are excellent.

Next, the first positive electrode active material and the second positive electrode active material constituting the positive electrode material of the present invention will be described in more detail.

## First Positive Active Material

The first positive electrode active material is in the form of a secondary particle in which a plurality of grains are aggregated, and includes an orientational structure in which the long axis of the grain is arranged toward the surface from the center of the secondary particle in at least a portion of the secondary particle. In this case, the expression "the long axis of the grain is arranged toward the surface from the center of the secondary particle" means that the angle formed by the shortest line segment connecting the center and the surface of the secondary particle while passing through the corresponding grain, and the long axis of the grain is within the range of -15° to 15°. The long axis of the grain means a line segment having the longest length among straight lines connecting two points on the surface of the grain while passing through the center of the grain. In the secondary particles of the positive electrode active material, the interface between the grain and the grain becomes a diffusion passage for lithium ions. When the grains are arranged to face the surface from the center of the secondary particle, the diffusion path of lithium ions inside the secondary particle is shortened, and thus lithium mobility is increased, and thus output and/or resistance characteristics may be improved.

Meanwhile, the grains in which the long axis of the grain is arranged toward the surface from the center of the secondary particle may have an angle within -15° to 15°, preferably within -10° to 10° formed by the long axis and the a-axis direction of the crystal structure. Since the lithium ions move in the a-axis direction in the grain, when the long axis of the grain and the a-axis direction of the crystal structure form an angle of -15° to 15°, the intercalation and deintercalation of the lithium ions may be facilitated, thereby improving output and/or resistance characteristics.

Meanwhile, the grains in which the long axis of the grain is arranged toward the surface from the center of the secondary particle may have an aspect ratio of 1.5 to 15, preferably 2 to 15, more preferably 4 to 15. When the aspect ratio of the grains satisfies the above range, the contraction and expansion of the grains during charging and discharging mainly occur in a short axis direction perpendicular to the orientation, thereby effectively suppressing the occurrence of cracks due to non-uniform grain contraction and expansion in the secondary particles.

Meanwhile, the first positive electrode active material is not limited thereto, but may have a core-shell structure including a core part in which grains are aggregated without special orientation, and a shell part in which the long axis of the grain is arranged toward the surface from the center of the secondary particle.

The core part is a region in which grains are randomly aggregated without special orientation, and is formed in the center of the secondary particle. The core part may be a part formed as a seed during a co-precipitation reaction for forming a precursor for a positive electrode active material, and for example, when a radius of the secondary particle from the center of the secondary particle refers to R, the core part may be a region located at a distance from the center of the secondary particle to 1/3R, or a region located at a distance from the center of the secondary particle to 1/4R.

The grains in the core part may have a shape close to a spherical shape, and may have an aspect ratio of 0.7 to 1.3, preferably 0.8 to 1.2.

Next, the shell part is a region which is formed outside the core part, and in which grains are arranged in an orientational structure. The shell part may be a part formed while particles are grown during a co-precipitation reaction for forming a precursor for a positive electrode active material, and for example, when a radius of the secondary particle from the center of the secondary particle refers to R, the shell part may be a region of 1/3R to R of the secondary particle or a region of 1/4R to R of the secondary particle.

The grains in the shell part may have a rod shape, and may have an aspect ratio of 1.5 to 15, preferably 2 to 15, and more preferably 4 to 15.

Meanwhile, in the first positive electrode active material of the present invention, the grains may have an average particle diameter of 0.05 $\mu$m to 4 $\mu$m, preferably 0.1 $\mu$m to 3 $\mu$m, and more preferably 0.1 $\mu$m to 2 $\mu$m. If the average particle diameter of the grains is too large, a rock salt phase may be formed to deteriorate resistance characteristics and lifetime characteristics, and if the average particle diameter of the grains is too small, a contact area with the electrolyte solution may increase, and thus the deterioration may occur rapidly.

Meanwhile, the first positive electrode active material may include a nickel-based lithium composite transition metal oxide, and for example, may include a nickel-based lithium composite transition metal oxide represented by Formula 1-1 below:

$$[\text{Formula 1-1}] \qquad \text{Li}_{x1}[\text{Ni}_{a1}\text{Co}_{b1}\text{M}^1_{c1}\text{M}^2_{d1}]\text{O}_{2-y1}\text{A}_{y1}$$

In Formula 1-1 above, $M^1$ above may be at least one element selected from the group consisting of Mn and Al, and may be, for example, Mn or a combination of Mn and Al.

$M^2$ above may be at least one element selected from the group consisting of W, Cu, Fe, V, Cr, Ti, Zr, Zn, Ta, Y, In, La, Sr, Ga, Sc, Gd, Sm, Ca, Ce, Nb, Mg, B, and Mo.

In addition, A above may be at least one element selected from the group consisting of F, Cl, Br, I, At, and S.

x1 above represents a ratio of the number of moles of Li to the total number of moles of transition metals, and may satisfy $0.98 \leq x1 \leq 1.20$, preferably $0.99 \leq x1 \leq 1.10$, and more preferably $1.0 \leq x1 \leq 1.10$.

a1 above represents a ratio of the number of moles of Ni to the total number of moles of the remaining metals excluding lithium, and may satisfy $0.6 \leq a1 \leq 0.9$, preferably $0.7 \leq a1 \leq 0.9$, more preferably $0.8 \leq a1 \leq 0.9$, and even more preferably $0.8 \leq a1 \leq 0.86$.

b1 above represents a ratio of the number of moles of Co to the total number of moles of the remaining metals excluding lithium, and may satisfy $0.01 \leq b1 < 0.4$, preferably $0.01 \leq b1 < 0.3$, more preferably $0.01 \leq b1 < 0.2$, and even more preferably $0.01 \leq b1 \leq 0.1$.

c1 above represents a ratio of the number of moles of $M^1$ to the total number of moles of the remaining metals excluding lithium, and may satisfy $0.01 \leq c1 < 0.4$, preferably $0.01 \leq c1 < 0.3$, more preferably $0.01 \leq c1 < 0.2$, and even more preferably $0.01 \leq c1 \leq 0.1$.

d1 above represents a ratio of the number of moles of $M^2$ to the total number of moles of the remaining metals excluding lithium, and may satisfy $0 \leq d1 \leq 0.2$, preferably $0 \leq d1 \leq 0.15$, and more preferably $0 \leq d1 \leq 0.10$.

y1 above represents the ratio of the number of moles of A element substituted at the oxygen position, and may satisfy $0 \leq y1 \leq 0.2$, preferably $0 \leq y1 \leq 0.15$, and more preferably $0 \leq y1 \leq 0.10$.

Meanwhile, the first positive electrode active material according to the present invention is characterized in that the cobalt concentration at the grain boundary, which is the interface between grains, is higher than the cobalt concentration inside the grains. In this case, the cobalt concentration refers to a molar ratio of cobalt among the remaining metals excluding lithium. That is, in the first positive electrode active material, cobalt is enriched on the grain boundary. When the cobalt is enriched in the grain boundary as described above, despite including the orientational structure, the particle breakage of the first positive electrode active material during rolling is reduced, and even if the particle breakage occurs due to rolling, side reactions with the electrolyte solution are minimized. Therefore, when the first positive electrode active material is applied, excellent high-temperature characteristics may be achieved compared to a conventional positive electrode active material having an orientational structure.

Meanwhile, the first positive electrode active material as described above may be prepared by a method for injecting a lithium composite transition metal oxide which is in the form of a secondary particle in which a plurality of grains are aggregated and includes an orientational structure in which the long axis of the grain is arranged toward the surface from the center of the secondary particle in at least a portion of the secondary particle, into a coating solution containing cobalt elements and then performing a heat treatment.

In this case, the lithium composite transition metal oxide including the orientational structure may be prepared by purchasing a commercially available product, or may be prepared by using a method for preparing a lithium composite transition metal oxide known in the art. For example, a lithium composite transition metal oxide including an orientational structure may be prepared by mixing a precursor for a positive electrode active material and a lithium raw material and then firing the mixture.

In order to prepare a positive electrode active material having an orientational structure as in the present invention, a precursor for a positive electrode active material having an orientational structure in which primary particles are arranged toward the surface from the center of the secondary particle should be used. The aggregation form of the primary particles of the precursor for a positive electrode active material is affected by pH, stirring speed, reaction temperature, and the like during the co-precipitation reaction. Accordingly, when the precursor for a positive electrode active material is prepared, the pH, stirring speed, reaction temperature, and the like may be appropriately adjusted to form a precursor for a positive electrode active material having an orientational structure, and by using this, a lithium composite transition metal oxide having an orientational structure may be prepared.

The lithium raw material and the positive electrode active material precursor may be mixed so that the molar ratio of Li and the total metal in the precursor is in a ratio of 1:1 to 1.2:1, and preferably 1:1 to 1.1:1. When the mixing ratio of the lithium raw material and the transition metal in the positive electrode active material precursor satisfies the above range, the crystal structure of the positive electrode active material is well developed, and thus the positive electrode active material having excellent capacity characteristics and structural stability may be prepared.

Examples of the lithium raw material may include a lithium-containing carbonate (*e.g.*, lithium carbonate, *etc.*), a hydrate (*e.g.*, lithium hydroxide hydrate ($LiOH \cdot H_2O$), *etc.*), a hydroxide (*e.g.,* lithium hydroxide, etc.), a nitrate (*e.g.,* lithium nitrate ($LiNO_3$), *etc.*), a chloride (*e.g.*, lithium chloride (LiCl), *etc.*), *etc.,* and any one alone thereof or a mixture of two or more thereof may be used.

The firing may be performed at an appropriate temperature in consideration of the composition of the lithium composite transition metal oxide, and for example, may be performed at 600 °C to 1,000 °C, and preferably 700 °C to 900 °C. The firing time may be, for example, 5-30 hours, and preferably 8-15 hours, but is not limited thereto.

Next, the lithium composite transition metal oxide including the above-described orientational structure is added to a coating solution containing cobalt elements and then heat-treated, so that cobalt is enriched on the grain boundary of the lithium composite transition metal oxide.

The coating solution containing cobalt elements may be formed by dissolving at least one selected from the group consisting of $Co(NO_3)_2$, $Co(NO_3)_2 \cdot 6H_2O$, $CoCl_2$, $CoSO_4$, $Co(OCOCH_3)_2 \cdot 4H_2O$, and $Co(OH)_2$ in a solvent such as water or ethanol.

As described above, when a wet coating by mixing the coating solution and the lithium composite transition metal oxide and then heat-treating the mixture is performed, the cobalt element contained in the coating solution may penetrate not only the surface of the secondary particle of the lithium composite transition metal oxide but also the interface (grain boundary) between grains, so that the cobalt concentration at the grain boundary may be higher than that inside the grains.

Meanwhile, the heat treatment may be performed in a range of 300 °C to 800 °C, preferably 400 °C to 700 °C, and more preferably 500 °C to 650 °C. When the heat treatment temperature satisfies the above range, the cobalt element contained in the coating solution may be enriched at the grain boundary to form a cobalt concentration at the grain boundary higher than that inside the grain. If the first heat treatment temperature is too low, the coating is not smoothly performed, and if the first heat treatment temperature is too high, cobalt is diffused into the grain and is not enriched at the grain boundary.

**Second Positive Electrode Active Material**

The second positive electrode active material includes a center part in the form of a single particle and/or quasi-single particle, and a coating layer formed on the center part and containing cobalt.

The center part is a single particle composed of a single nodule and/or a quasi-single particle which is a complex of at most 30 nodules, preferably 2 to 20 nodules, and more preferably 2 to 10 nodules.

The second positive electrode active material having the center part in the form of a single particle and/or quasi-single particle has a higher particle strength than the existing positive electrode active material in the form of a secondary particle in which dozens to hundreds of primary particles are aggregated, and thus, there is less particle breakage during rolling. In addition, since the second positive electrode active material has small number of nodules constituting the positive electrode active material particles, changes due to volume expansion and contraction of the nodules during charging and discharging are less, and accordingly, the occurrence of cracks in the particles is significantly reduced.

Meanwhile, the center part may include a nickel-based lithium composite transition metal oxide represented by Formula 1-2 below:

$$[Formula\ 1\text{-}2] \quad Li_{x2}[Ni_{a2}CO_{b2}M^1_{c2}M^2_{d2}]O_{2\text{-}y2}A_{y2}$$

In Formula 1-2 above, $M^1$ above may be at least one element selected from the group consisting of Mn and Al, preferably, Mn, Al or a combination thereof, and more preferably, Mn or Mn and Al.

$M^2$ above may be at least one element selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo, preferably may be at least one selected from the group consisting of Zr, Y, Mg, and Ti, and more preferably may be Zr, Y, or a combination thereof. The $M^2$ element is not necessarily included, but when included in an appropriate amount, the $M^2$ element may serve to promote particle growth during the firing or improve the crystal structure stability.

x2 above represents a molar ratio of lithium in the lithium nickel-based oxide, and may satisfy $0.8 \leq x2 \leq 1.2$, $0.85 \leq x2 \leq 1.15$, or $0.9 \leq x2 \leq 1.2$. When the molar ratio of lithium satisfies the above range, the crystal structure of the positive electrode active material may be stably formed.

a2 above represents a molar ratio of nickel among all metals excluding lithium, and may satisfy $0.8 \leq a2 < 1$, $0.82 \leq a2 \leq 1$, or $0.83 \leq a2 \leq 1$. When the molar ratio of nickel satisfies the above range, high energy density may be exhibited and high capacity may be achieved.

b2 above represents a molar ratio of cobalt among all metals excluding lithium, and may satisfy $0 < b2 < 0.2$, $0 < b2 < 0.18$, or $0.01 \leq b2 \leq 0.17$. When the molar ratio of cobalt satisfies the above range, good resistance characteristics and output characteristics may be achieved.

c2 above represents a molar ratio of the $M^1$ element among all metals excluding lithium, and may satisfy $0.01 \leq c2 \leq 0.2$, $0.01 \leq c2 \leq 0.18$, or $0.01 \leq c2 \leq 0.17$. When the molar ratio of the $M^1$ element satisfies the above range, the positive electrode active material exhibits excellent structural stability.

d2 above represents a ratio of the number of moles of $M^2$ to the total number of moles of the remaining metals excluding lithium, and may satisfy $0 \leq d2 \leq 0.2$, preferably $0 \leq d2 \leq 0.15$, and more preferably $0 \leq d2 \leq 0.10$.

y2 above represents a ratio of the number of moles of the A element substituted at the oxygen position, and may satisfy $0 \leq y2 \leq 0.2$, preferably $0 \leq y2 \leq 0.15$, and more preferably $0 \leq y2 \leq 0.10$.

Meanwhile, the second positive electrode active material according to the present invention includes a coating layer containing cobalt on a center part including the single particles and/or the quasi-single particles.

In general, the positive electrode active material in the form of a single particle and/or quasi-single particle is prepared by performing the firing at a higher temperature than when the positive electrode active material in the form of secondary particle is prepared, and when the firing temperature is high, the rock salt phase that is electrically inactive increases on the particle surface, thereby increasing the resistance of the positive electrode active material. However, when the coating layer containing cobalt is formed on the surface of the single particle and/or the quasi-single particle as in the present invention, recrystallization is performed through a reaction with cobalt in the process of forming the coating layer, thereby reducing the rock salt phase on the surface of the single particle and/or the quasi-single particle, thereby improving resistance characteristics.

Specifically, the coating layer may be an oxide containing lithium and cobalt, and may have, for example, a composition represented by Formula 2 below:

$$[Formula\ 2] \quad Li_zCo_{1\text{-}w}M^3_wO_2$$

In Formula 2 above, $M^3$ above may be at least one selected from the group consisting of Ni, Mn, Al, W, Cu, Fe, V, Cr, Ti, Zr, Zn, Ta, Y, In, La, Sr, Ga, Sc, Gd, Sm, Ca, Ce, Nb, Mg, B, and Mo, and $0.8 \leq z \leq 1.2$ and $0 \leq w \leq 0.2$ may be satisfied. Preferably, $M^3$ above may be at least one selected from the group consisting of Ni, Mn, Al, Ti, Zr, and Mg, and $0.8 \leq z \leq 1.1$ and $0 \leq w \leq 0.1$ may be satisfied.

When the coating layer satisfies the above composition, the effects of improving initial resistance characteristics and high-temperature lifetime may be obtained.

Meanwhile, the shape or area of the coating layer is not particularly limited. For example, the coating layer may be in the form of a continuous film surrounding the entire surface of the single particle and/or the quasi-single particle constituting the center part, or may be in the form of particles discontinuously distributed on the single particle and/or the quasi-single particle. In addition, the area of the coating layer may be 10% to 100%, 10% to 80%, or 20% to 70% based on the total surface area of the center part.

Meanwhile, a nodule of the second positive electrode active material according to the present invention may have an average particle diameter of 0.5-3 $\mu$m, preferably 0.8-2.5 $\mu$m, and more preferably 0.8-1.5 $\mu$m. When the average particle diameter of the nodules satisfies the above range, the positive electrode active material in the form of single particles and/or quasi-single particles having excellent electrochemical properties may be formed. If the average particle diameter of the nodules is too small, the number of aggregations of the nodules that form the center part increases, thereby reducing the effect of suppressing the occurrence of particle breakage during rolling, and if the average particle diameter of the nodules is too large, the lithium diffusion path inside the nodule is lengthened, thereby increasing resistance and reducing output characteristics.

Meanwhile, the second positive electrode active material may have an average particle diameter $D_{50}$ of 2 $\mu$m to 7 $\mu$m, preferably 2.5 $\mu$m to 7 $\mu$m, and more preferably 3 $\mu$m to 7 $\mu$m. When the $D_{50}$ of the second positive electrode active material is too small, slurry aggregation occurs, making it difficult to manufacture an electrode, the impregnation property of the electrolyte solution is deteriorated, and electrochemical properties are deteriorated, and when the $D_{50}$ is too large, resistance increases and output characteristics are deteriorated.

In addition, the second positive active material may have an average crystallite size of 150 nm to 300 nm, 200 nm to 280 nm, or 200 nm to 250 nm. When the average crystallite size satisfies the above range, the generation of a rock-salt phase may be reduced when the lithium nickel-based oxide is prepared, and thus the positive electrode active material in the form of a single particle and/or quasi-single particle having excellent resistance characteristics may be prepared. Generally, the positive electrode active material in the form of a single particle and/or quasi-single particle is prepared by a method for increasing the size of nodules by elevating the firing temperature, and there is a limitation in that when the size of the nodules only increases while the size of the crystal is small, a rock-salt phase is formed on the surface of the nodules, thereby increasing resistance. However, when the average crystallite size and the average particle diameter of nodules increase together, the formation of a rock-salt phase is minimized to thus obtain an effect of suppressing an increase in resistance.

Meanwhile, the second positive electrode active material may be prepared by mixing a precursor for a positive electrode active material and a lithium raw material and firing the mixture to form a single particle and/or a quasi-single particle, mixing the single particle and/or quasi-single particle with a coating raw material containing Co, and then heat-treating the mixture.

In this case, the precursor for a positive electrode active material may be prepared by purchasing a precursor such as a commercially available nickel cobalt manganese-based hydroxide, or by a precursor preparation method known in the art such as a co-precipitation method.

Preferably, the precursor for a positive electrode active material as used herein may be a transition metal hydroxide containing nickel and cobalt and having a Ni content of 80 mol% or more in the total transition metals, and more preferably, may be a nickel cobalt manganese hydroxide having a Ni content of 80 mol% or more. When the nickel content in the transition metal precursor satisfies the above range, high capacity characteristics may be achieved.

As the lithium raw material, a lithium-containing sulfate, a nitrate, an acetate, a carbonate, an oxalate, a citrate, a halide, a hydroxide, an oxyhydroxide, or the like may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

Meanwhile, the lithium raw material and the positive electrode active material precursor may be mixed so that the molar ratio of Li and the total metal in the precursor is in a ratio of 1:1 to 1.1:1, preferably 1.02:1 to 1.05:1. When the mixing ratio of the lithium raw material and the metal in the positive electrode active material precursor satisfies the above range, the layered crystal structure of the positive electrode active material is well developed, and thus the positive electrode active material having excellent capacity characteristics and structural stability may be prepared.

Meanwhile, the sintering is performed at a temperature at which single particles and/or quasi-single particles can be formed. In order to form single particles and/or quasi-single particles, the firing should be performed at a higher temperature compared to the time when the conventional positive electrode active material in the form of a secondary particle is prepared, and for example, the firing should be performed at a temperature higher by 30 °C to 100 °C compared to the time when the conventional positive electrode active material in the form of a secondary particle is prepared in the case of the same precursor composition. The firing temperature for forming single particles and/or quasi-single particles may vary with the metal composition in the precursor, and for example, when a high-Ni lithium nickel-based oxide having a nickel (Ni) content of 80 mol% or more is to be formed as single particles and/or quasi-single particles, the primary firing temperature may be about 800 °C to about 1,000 °C, preferably about 800 °C to about 950 °C, and more preferably about 800 °C to about 900 °C. When the firing temperature satisfies the above range, single particles and/or quasi-single particles having excellent electrochemical properties may be prepared. When the firing temperature is less than 800 °C, the positive electrode active material in the form of a secondary particle is prepared, and when the temperature is greater than 1,000 °C, the sintering is excessively performed, and thus the layered crystal structure is not properly formed, thereby leading to deterioration in the electrochemical properties.

In addition, the firing may be performed in an oxygen atmosphere for 6 hours to 35 hours, preferably 6 hours to 20 hours, and more preferably 6 hours to 12 hours. When the firing time satisfies the above range, single particles and/or quasi-single particles may be formed. When the firing time is too short, particle growth is insufficient to thus form a lithium nickel-based oxide in the form of a secondary particle, and when the time is too long, a rock-salt phase may occur, thereby leading to deterioration in the electrochemical properties of the active material. In the present specification, the oxygen atmosphere refers to an atmosphere containing a sufficient amount of oxygen for firing, the atmosphere including an air atmosphere. In particular, it is preferable to perform the firing in an atmosphere having an oxygen partial pressure higher than the air atmosphere.

Meanwhile, cobalt hydroxide, or the like may be used as the coating raw material containing Co, but the present invention is not limited thereto.

A method for mixing single particles and/or quasi-single particles with a Co-containing coating raw material is not particularly limited, and various coating methods known in the art may be applied, for example, dry coating, wet coating, and the like.

Meanwhile, the heat treatment may be performed at, for example, 300 °C to 800 °C, and preferably, 600 °C to 750 ° C for 5 hours to 20 hours, and preferably 10 hours to 12 hours.


<Positive Electrode>

Next, a positive electrode according to the present invention will be described.

The positive electrode includes the positive electrode material according to the present invention. Specifically, the positive electrode includes a positive electrode current collector and a positive electrode active material layer formed on the positive electrode current collector, wherein the positive electrode active material layer includes the positive electrode material according to the present invention.

Since the positive electrode material is the same as described above, detailed descriptions thereof will be omitted, and the remaining configurations will be only described in detail below.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, fired carbon, or aluminum or stainless steel that is surface-treated with one of carbon, nickel, titanium, silver, or the like may be used as the positive electrode current collector. Also, the positive electrode current collector may typically have a thickness of 3 $\mu$m to 500um, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may optionally include a conductive agent, a binder, etc., if necessary, in conjunction with the positive electrode material.

In this case, the positive electrode material may be included in an amount of 80 wt% to 99 wt%, and more specifically, 85 wt% to 98.5 wt% with respect to a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode material of the present invention is used. Specifically, a positive electrode slurry composition, which is prepared by dissolving or dispersing optionally the binder, the conductive agent, and the dispersing agent, if necessary, as well as the positive electrode material in a solvent, is applied on the positive electrode current collector, and then the positive electrode current collector is dried and rolled, thereby manufacturing the positive electrode.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersing agent in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode current collector.

<Electrochemical Device>

In the present invention, an electrochemical device including the positive electrode may be produced. The electrochemical device may specifically be a battery or a capacitor, and more specifically, may be a lithium secondary battery.

The lithium secondary battery may specifically include a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 $\mu$m to 500 $\mu$m, and as in the case of the positive electrode current collector, microscopic irregularities may be formed on the surface of the negative electrode current collector to enhance the adhesion of a negative electrode active material. For example, the negative electrode current collector may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO_\beta$ ($0 < \beta < 2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

The negative electrode active material layer may be prepared, for example, by coating a negative electrode slurry composition, which is prepared by dissolving or dispersing optionally the binder and the conductive agent as well as the negative electrode active material in a solvent, on the negative electrode current collector and drying the coated negative electrode current collector, or may be prepared by casting the negative electrode slurry composition on a separate support and then laminating a film separated from the support on the negative electrode current collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used in order to secure heat resistance or mechanical strength, and the separator having a single-layered or multilayered structure may be optionally used.

In addition, an electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the manufacture of the lithium secondary battery, but is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC) ; an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

The lithium secondary battery including the positive electrode active material according to the present invention as describe above exhibits excellent capacity characteristics and service life characteristics, and may be useful for various fields such as portable devices such as a mobile phone, a notebook computer, and a digital camera, or electric cars.

## MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Preparation Example 1

$NiSO_4$, $CoSO_4$, and $MnSO_4$ were mixed in distilled water in an amount such that a molar ratio of nickel:cobalt:manganese was 8:1:1 to prepare a transition metal aqueous solution.

Then, after deionized water was put into the reactor, dissolved oxygen in the water was removed by purging the reactor with nitrogen gas, adding NaOH to maintain the pH in the reactor at 11.

Thereafter, while adding an aqueous transition metal solution, an aqueous NaOH solution, and an aqueous $NH_4OH$ solution to the reactor, a co-precipitation reaction was performed for 30 hours under the conditions of a reaction temperature of 50 °C, a pH of 11, and a stirring speed of 400 rpm to prepare a precursor, $Ni_{0.8}Co_{0.1}Mn_{0.1}(OH)_2$ for a positive electrode active material having an average particle diameter ($D_{50}$) of 12 $\mu$m. In this case, a molar ratio of the transition metal ion to $NH_4OH$ was 1:1.10.

The precursor for a positive electrode active material and LiOH were mixed so that the molar ratio of Li:the transition metals (Ni+Co+Mn) was 1.02:1, and fired at 730 °C for 20 hours, and then washed and dried to prepare a lithium composite transition metal oxide.

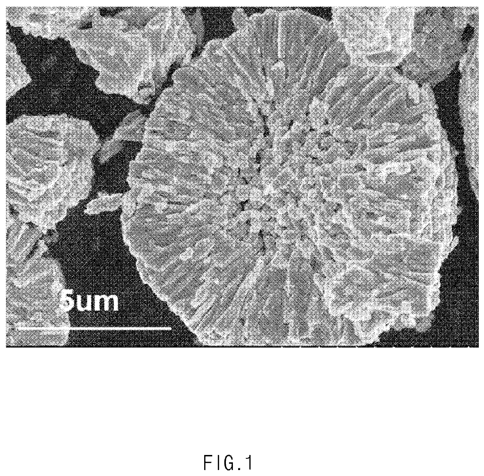

FIG. 1 shows a scanning electron microscope (SEM) image obtained by measuring a cross section of the lithium composite transition metal oxide prepared as described above. Referring to FIG. 1, it may be confirmed that the lithium composite transition metal oxide prepared by the method is in the form of a secondary particle in which a plurality of grains are aggregated, and the long axis of the grain is arranged toward the surface from the center of the secondary particle.

### Preparation Example 2

$Co(NO_3)_2 \cdot 6H_2O$ was dissolved in deionized water (DI water) to prepare a Co-containing coating solution.

The lithium composite transition metal oxide prepared in Preparation Example 1 was added to the coating solution, stirred at 500 rpm for 3 hours, and then heat-treated with 600 °C to prepare a positive electrode active material.

### Preparation Example 3

A lithium composite transition metal oxide was prepared in the same manner as in Preparation Example 1, except that an aqueous transition metal solution, an aqueous NaOH solution, and an aqueous $NH_4OH$ solution were added so that the molar ratio of the transition metal to $NH_4OH$ was 1:0.8 during the preparation of the precursor for a positive electrode active material, and a co-precipitation reaction was performed under the conditions of a reaction temperature of 60 °C, a pH of 11, and a stirring speed of 300 rpm for 30 hours, and firing was performed at 750 °C.

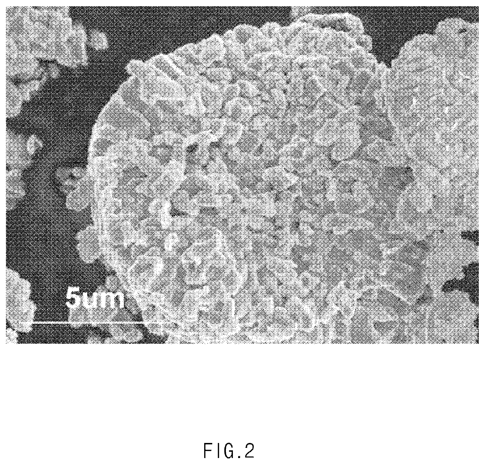

FIG. 2 shows a scanning electron microscope (SEM) image obtained by measuring a cross section of the lithium composite transition metal oxide prepared as described above. Referring to FIG. 2, it may be confirmed that the lithium composite transition metal oxide prepared by the above method is in the form of a secondary particle in which a plurality of grains are aggregated, and the grains are arranged in a disorderly manner without special directionality.

$Co(NO_3)_2 \cdot 6H_2O$ was dissolved in deionized water (DI water) to prepare a Co-containing coating solution, and the lithium composite transition metal oxide prepared above was added to the coating solution, stirred at 500 rpm for 3 hours, and then heat-treated at 600 °C to prepare a positive electrode active material.

### Preparation Example 4

A transition metal precursor, $Ni_{0.83}Co_{0.11}Mn_{0.06}(OH)_2$ and $LiOH \cdot H_2O$ were mixed so that the weight ratio of the transition metals (Ni+Co+Mn) and Li was 1:1.03, the mixture was sintered at 900 °C for 10 hours, and then milled to prepare a nickel-based lithium composite transition metal oxide.

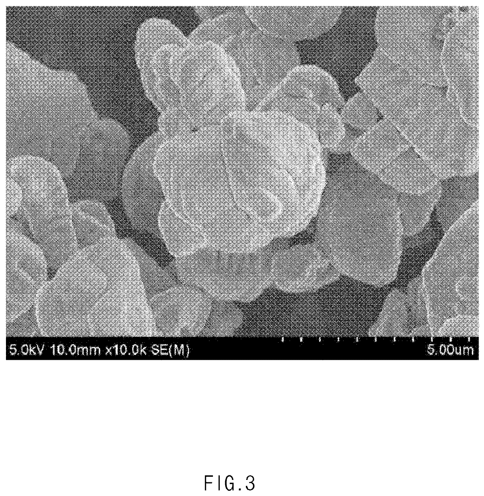

FIG. 3 shows a SEM image of the nickel-based lithium composite transition metal oxide prepared by the above method. Referring to FIG. 3, it may be confirmed that the lithium composite transition metal oxide prepared by the above method is in the form of a single particle and/or quasi-single particle.

**Preparation Example 5**

The nickel-based lithium composite transition metal oxide prepared in Preparation Example 4 and $Co(OH)_2$ were mixed in a weight ratio of 100:0.2 and heat-treated at 700 °C for 10 hours to prepare a positive electrode active material having a cobalt coating layer formed thereon.

**Example**

A positive electrode material was prepared by mixing the positive electrode active material prepared in Preparation Example 2 and the positive electrode active material prepared in Preparation Example 5 in a weight ratio of 6:4.

**Comparative Example 1**

A positive electrode material was prepared by mixing the positive electrode active material prepared in Preparation Example 3 and the positive electrode active material prepared in Preparation Example 5 in a weight ratio of 6:4.

**Comparative Example 2**

A positive electrode material was prepared by mixing the positive electrode active material prepared in Preparation Example 2 and the positive electrode active material prepared in Preparation Example 4 in a weight ratio of 6:4.

**Comparative Example 3**

A positive electrode material was prepared by mixing the positive electrode active material prepared in Preparation Example 1 and the positive electrode active material prepared in Preparation Example 5 in a weight ratio of 6:4.

<Manufacture of Lithium Secondary Battery>

The positive electrode material prepared in each of Example and Comparative Examples 1 to 3, a conductive agent (Denka black), and a binder (PVDF) were mixed in an N-methyl-2-pyrrolidone (NMP) solvent in a weight ratio of 96:2:2 to prepare a positive electrode slurry. One surface of an aluminum current collector was coated with the positive electrode slurry, dried, and then rolled to prepare a positive electrode.

Next, a negative electrode active material (natural graphite), a conductive agent (carbon black), and a binder (PVDF) were mixed in an N-methylpyrrolidone solvent in a weight ratio of 96:2:2 to prepare a negative electrode slurry. A copper current collector was coated with the negative electrode slurry composition, dried, and then rolled to prepare a negative electrode.

Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution was used in which 1.0 M $LiPF_6$ was dissolved in an organic solvent in which ethylene carbonate and ethylmethyl carbonate were mixed in a volume ratio of 3:7.

**Experimental Example 1: High-temperature Life Characteristics**

Each of the lithium secondary batteries prepared above was charged to 4.2 V at a constant current of 1.0 C at 45 °C, and then discharged to 2.5 V at a constant current of 0.5 C, which was set as one cycle. After 50 cycles of charging and discharging were performed, the capacity retention was measured. The measurement results are shown in Table 1 below.

**Experimental Example 2: Generation of Gas During High Temperature Storage**

Each of the lithium secondary batteries prepared above was charged up to SOC 100, stored at 60 °C for 8 weeks, and then perforated in a chamber in a vacuum atmosphere to discharge gas which is inside the battery and collect the gas inside the vacuum chamber, and the amount of gas generated was analyzed using a gas chromatograph-flame ionization detector (GC-FID). When the amount of gas generated of the lithium secondary battery to which the positive electrode material of Example was applied was set as 100%, the ratio of the amount of gas generated of the lithium secondary battery to which each of the positive electrode materials of Comparative Examples 1 to 3 was applied is shown in Table 1 below.

**Experimental Example 3: Evaluation of Resistance**

Each of the lithium secondary batteries prepared above was charged and discharged for one cycle at 25 °C under the condition of 0.2/0.2C, charged and discharged to SOC 50 and SOC 10 on the basis of discharge capacity by applying a 0.2C current in the next cycle, and then DCIR resistance was measured by applying a 1C pulse for 10 seconds. Measurement results are shown in Table 1.

**Experimental Example 4: Evaluation of Breakage Rate of Secondary Particles**

Each 3 g of the positive electrode material powders of Example and Comparative Examples 1 to 3 was collected, and a volume cumulative particle size distribution graph was plotted. Then, the collected positive electrode material powder was put into a holder having a diameter of 1.3 cm, a pressure of 6 ton was applied thereto, and the volume cumulative particle size distribution graph was plotted again. In the volume cumulative particle size distribution graph before pressurization, a particle diameter range larger than a particle diameter at a point where dY/dX (where X is a particle diameter and Y is a volume) is minimized is defined as a secondary particle region, and a value calculated by Equation below in the secondary particle region was evaluated as a breakage rate of secondary particles.

(Equation)

$$\text{Breakage rate of secondary particles} = \sum (X_0 Y_0 - X_P Y_P)$$

In Equation above, $X_0$ and $Y_0$ are a particle size and a volume, respectively, in the volume cumulative particle size distribution graph before pressurization, and $X_p$ and $Y_p$ are a particle size and a volume, respectively, in the volume cumulative particle size distribution graph after applying a pressure of 6 ton.

[Table 1]

| | Capacity retention (%) | Amount of gas generatio n (%) | SOC 50 resistanc e (unit: $\Omega$) | SOC 10 resistanc e (unit: $\Omega$) | Breakage rate of secondary particles |
|---|---|---|---|---|---|
| Example | 95 | 100 | 1.38 | 1.70 | 31 |
| Comparative Example 1 | 91 | 220 | 1.39 | 1.81 | 37 |
| Comparative Example 2 | 91 | 160 | 1.48 | 2.15 | 32 |
| Comparative Example 3 | 92 | 250 | 1.45 | 2.01 | 76 |

Referring to Table 1, it may be confirmed that the positive electrode material of Example has less particle breakage after the pressurization compared to the positive electrode materials of Comparative Examples 1 to 3, and it may be confirmed that the lithium secondary battery to which the positive electrode material of Example is applied has excellent high-temperature lifetime characteristics compared to the lithium secondary batteries to which the positive electrode materials of Comparative Examples 1 to 3 are applied, and exhibits excellent high-temperature characteristics due to a small amount of gas generated after the high-temperature storage.

**Claims**

1.  A positive electrode material comprising:

    a first positive electrode active material being in the form of a secondary particle in which a plurality of grains are aggregated, comprising an orientational structure in which the long axis of the grain is arranged toward the surface from the center of the secondary particle in at least a portion of the secondary particle, and having a cobalt concentration at the grain boundary, which is the interface between the grains, higher than a cobalt concentration inside the grains; and

a second positive electrode active material comprising a center part having at least one form among a single particle composed of one nodule and a quasi-single particle composed of a composite of at most 30 nodules, and a coating layer formed on the center part and containing cobalt.

2. The positive electrode material of claim 1, wherein the positive electrode material has a bimodal particle size distribution, and the particle diameter of the first positive electrode active material is larger than that of the second positive electrode active material.

3. The positive electrode material of claim 1, wherein the first positive electrode active material has a $D_{50}$ of 8 $\mu$m to 20 $\mu$m, and the second positive electrode active material has a $D_{50}$ of 2 $\mu$m to 7 $\mu$m.

4. The positive electrode material of claim 1, wherein the first positive active material and the second positive electrode active material each independently comprise a nickel-based lithium composite transition metal oxide represented by Formula 1 below:

$$[\text{Formula 1}] \qquad Li_x[Ni_aCo_bM^1_cM^2_d]O_{2-y}A_y$$

wherein, in Formula 1 above,

M$^1$ above is at least one element selected from the group consisting of Mn and Al,
M$^2$ above is at least one element selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo,
A above is at least one element selected from the group consisting of F, Cl, Br, I, At, and S, and
$0.98 \leq x \leq 1.20$, $0 < a < 1$, $0 < b < 1$, $0 < c < 1$, $0 \leq d \leq 0.2$, and $0 \leq y \leq 0.2$.

5. The positive electrode material of claim 1, wherein the first positive electrode active material and the second positive electrode active material are included in a weight ratio of 90:10 to 50:50.

6. The positive electrode material of claim 1, wherein the first positive electrode active material comprises a nickel-based lithium composite transition metal oxide represented by Formula 1-1 below:

$$[\text{Formula 1-1}] \qquad Li_{x1}[Ni_{a1}Co_{b1}M^1_{c1}M^2_{d1}]O_{2-y1}A_{y1}$$

wherein, in Formula 1-1 above,

M$^1$ above is at least one element selected from the group consisting of Mn and Al,
M$^2$ above is at least one element selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo,
A above is at least one element selected from the group consisting of F, Cl, Br, I, At, and S, and
$0.98 \leq x1 \leq 1.20$, $0.6 \leq a1 \leq 0.9$, $0.01 \leq b1 < 0.4$, $0.01 \leq c1 < 0.4$, $0 \leq d1 \leq 0.2$, and $0 \leq y1 \leq 0.2$.

7. The positive electrode material of claim 1, wherein, in the first positive electrode active material, the grains in which the long axis is arranged toward the surface from the center of the secondary particle have an angle within -15° to 15° formed by the long axis and the a-axis direction of the crystal structure.

8. The positive electrode material of claim 1, wherein, in the first positive electrode active material, the grains in which the long axis is arranged toward the surface from the center of the secondary particle have an aspect ratio of 1.5 to 15.

9. The positive electrode material of claim 1, wherein the first positive electrode active material comprises a core part in which grains are aggregated in a disorderly manner, and a shell part which is formed outside the core part, and in which grains are arranged in an orientational structure.

10. The positive electrode material of claim 9, wherein the grains inside the core part have an aspect ratio of 0.8 to 1.2.

11. The positive electrode material of claim 9, wherein the grains inside the shell part have an aspect ratio of 1.5 to 15.

12. The positive electrode material of claim 1, wherein the grains of the first positive electrode active material have an average particle diameter of 0.05 $\mu$m to 4 $\mu$m.

13. The positive electrode material of claim 1, wherein the center part of the second positive electrode active material comprises a nickel-based lithium composite transition metal oxide represented by Formula 1-2 below:

[Formula 1-2] $Li_{x2}[Ni_{a2}Co_{b2}M^1_{c2}M^2_{d2}]O_{2-y2}A_{y2}$

wherein, in Formula 1-2 above,

$M^1$ above is at least one element selected from the group consisting of Mn and Al,
$M^2$ above is at least one element selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo,
A above is at least one element selected from the group consisting of F, Cl, Br, I, At, and S, and
$0.98 \leq x2 \leq 1.20$, $0.8 \leq a2 < 1$, $0 < b2 < 0.2$, $0.01 \leq c2 < 0.2$, $0 \leq d2 \leq 0.2$, and $0 \leq y2 \leq 0.2$.

14. The positive electrode material of claim 1, wherein the coating layer of the second positive electrode active material has a composition represented by Formula 2 below:

[Formula 2] $Li_z Co_{1-w} M^3_w O_2$

wherein, in Formula 2 above, $M^3$ above is at least one selected from the group consisting of Ni, Mn, Al, W, Cu, Fe, V, Cr, Ti, Zr, Zn, Ta, Y, In, La, Sr, Ga, Sc, Gd, Sm, Ca, Ce, Nb, Mg, B, and Mo, $0.8 \leq z \leq 1.2$, and $0 \leq w \leq 0.2$.

15. The positive electrode material of claim 1, wherein the nodules of the second positive electrode active material have an average particle diameter of 0.5 μm to 3.5 μm.

16. A positive electrode comprising the positive electrode material according to any one of claims 1 to 15.

17. A lithium secondary battery comprising the positive electrode of claim 16.

FIG.1

FIG.2

FIG.3

## INTERNATIONAL SEARCH REPORT

| International application No. |
| --- |
| **PCT/KR2023/021279** |

### A. CLASSIFICATION OF SUBJECT MATTER

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); H01M 10/052(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 양극 활물질(cathode active material), 그레인(grain), 2차 입자(secondary particle), 배향성 구조(orientation structure), 노듈(nodule), 단입자(single particle), 중심부(core), 코팅층(coating layer), 코발트(cobalt, Co)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0160919 A (SAMSUNG SDI CO., LTD.) 06 December 2022 (2022-12-06)<br>See claims 1, 5-7 and 9; and paragraphs [0022] and [0041]. | 1-17 |
| Y | KR 10-2022-0128138 A (SAMSUNG SDI CO., LTD.) 20 September 2022 (2022-09-20)<br>See claims 1 and 3; paragraphs [0022]-[0023], [0026], [0029] and [0033]; and figures 1-3. | 1-17 |
| Y | KR 10-2314045 B1 (SAMSUNG SDI CO., LTD. et al.) 18 October 2021 (2021-10-18)<br>See claim 1; paragraphs [0018], [0023], [0037] and [0124]; and figure 1. | 1-17 |
| A | KR 10-2019-0024680 A (SAMSUNG ELECTRONICS CO., LTD. et al.) 08 March 2019 (2019-03-08)<br>See entire document. | 1-17 |
| A | KR 10-2326430 B1 (SAMSUNG SDI CO., LTD.) 15 November 2021 (2021-11-15)<br>See entire document. | 1-17 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021279**

| Patent document cited in search report | | | Publication date (day/month/year) | Patent family member(s) | | | Publication date (day/month/year) |
|---|---|---|---|---|---|---|---|
| KR | 10-2022-0160919 | A | 06 December 2022 | CN | 115411237 | A | 29 November 2022 |
| | | | | EP | 4095949 | A1 | 30 November 2022 |
| | | | | US | 2022-0384780 | A1 | 01 December 2022 |
| KR | 10-2022-0128138 | A | 20 September 2022 | CN | 115084458 | A | 20 September 2022 |
| | | | | EP | 4057386 | A1 | 14 September 2022 |
| | | | | US | 2022-0293913 | A1 | 15 September 2022 |
| KR | 10-2314045 | B1 | 18 October 2021 | KR | 10-2016-0074236 | A | 28 June 2016 |
| | | | | US | 10283770 | B2 | 07 May 2019 |
| | | | | US | 2016-0181611 | A1 | 23 June 2016 |
| KR | 10-2019-0024680 | A | 08 March 2019 | JP | 2019-046795 | A | 22 March 2019 |
| | | | | JP | 7228975 | B2 | 27 February 2023 |
| | | | | KR | 10-2629461 | B1 | 26 January 2024 |
| KR | 10-2326430 | B1 | 15 November 2021 | CN | 111193008 | A | 22 May 2020 |
| | | | | CN | 111193008 | B | 09 August 2022 |
| | | | | EP | 3657581 | A1 | 27 May 2020 |
| | | | | JP | 2020-087925 | A | 04 June 2020 |
| | | | | JP | 6923621 | B2 | 25 August 2021 |
| | | | | KR | 10-2020-0056341 | A | 22 May 2020 |
| | | | | US | 11495796 | B2 | 08 November 2022 |
| | | | | US | 2020-0152981 | A1 | 14 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183385